# EUROPÄISCHE PATENTSCHRIFT

(11) **EP 1 816 031 B1**
(45) Veröffentlichungstag und Bekanntmachung des Hinweises auf die Patenterteilung: **27.05.2009**
(21) Anmeldenummer: 07002626.5
(22) Anmeldetag: 07.02.2007
(51) Int. Cl.: B60P 7/08, B63B 25/24, B60P 7/135

(54) **Befestigungssystem**
Fastening system
Système de fixation

(30) Priorität: 07.02.2006 DE 102006005559
(43) Veröffentlichungstag der Anmeldung: 08.08.2007
(73) Patentinhaber: Berger, Manfred, 5020 Salzburg (AT)
(72) Erfinder: Berger, Manfred, 5020 Salzburg (AT)
(74) Vertreter: Müller-Boré & Partner Patentanwälte

(56) Entgegenhaltungen:
- EP-A- 0 702 160
- EP-A- 1 108 608
- EP-A- 1 300 283
- WO-A-20/05065993
- DE-U1- 20 317 183
- FR-A- 2 675 442
- US-A- 5 259 711

## Beschreibung

Die Erfindung bezieht sich auf ein Befestigungssystem zur Befestigung von Spannelementen, insbesondere von Gurten, Sperrstangen oder dergleichen, welches eine Schiene sowie ein dazu gehöriges Befestigungselement aufweist.

Befestigungssysteme zur Befestigung von Spannelementen sind hinreichend aus dem Stand der Technik bekannt. So offenbart beispielsweise die DE 43 05 818 A1 eine Vorrichtung zur Sicherung einer Ladung in einem Laderaum eines Fahrzeugs, eines Containers oder dergleichen, mit einer an oder in einer Wandung des Laderaums angeordneten, ortsfesten Schiene und einem an der Schiene gelagerten Sicherungselement, wobei die Schiene einen Grundkörper des Sicherungselements klammerförmig umgreift.

Aus FR 2 675 442 A ist ein Befestigungssystem bestehend aus einer u-förmigen Schiene, deren freie Enden nach innen gebogen sind, wodurch der Knopf des Ankers erfasst wird, bekannt.

Dokument EP 0 702 160 A2 zeigt eine Befestigungsmutter, die beispielsweise der Festlegung von Bauteilen oder Rohrleitungen an einer C-förmig ausgebildeten Profilschiene dient, die eine in Längsrichtung verlaufende, schlitzartige Öffnung aufweist. Die Breite der schlitzartigen Öffnung ist durch zwei Schenkel begrenzt, die parallel zueinander in die Profilschiene hinein abgebogen sind.

Problematisch bei derartigen Sicherungssystemen ist; daß diese bauartbedingt lediglich eine bestimmte maximale Last aufnehmen können.

Es ist somit Aufgabe der vorliegenden Erfindung, ein Befestigungssystem zur Befestigung von Spannelementen, insbesondere von Gurten, Sperrstangen oder dergleichen, vorzusehen, welches fähig ist, erhöhte Belastungen aufzunehmen.

Diese Aufgabe wird durch ein Befestigungssystem zur Befestigung von Spannelementen, insbesondere von Gurten, Sperrstangen oder dergleichen, mit den Merkmalen gemäß Anspruch 1 gelöst. Bevorzugte Ausführungsformen sind Gegenstand der abhängigen Unteransprüche.

Erfindungsgemäß ist ein Befestigungssystem zur Befestigung von Spannelementen, insbesondere von Gurten, Sperrstangen oder dergleichen, vorgesehen, umfassend zumindest eine Schiene und zumindest ein Befestigungselement, wobei die Schiene integral aus zumindest einem Grundträgerelement sowie zumindest zwei Eingriffselementen zusammengefügt ist und ein Halbhohlprofil ausbildet, wobei die Eingriffselemente zumindest bereichsweise Eingriffsabschnitte aufweisen, und wobei das Befestigungselement ausgelegt ist, im Halbhohlprofil der Schiene zu gleiten und über Arretierungsabschnitte mit den Eingriffsabschnitten in Eingriff zu gelangen, wobei das Grundträgerelement aus einer Basis und zwei zur Basis rechtwinklig angeordneten Wandabschnitten ausgebildet ist, wobei von den freien Endbereichen der Wandabschnitte zueinander gerichtete Schenkelabschnitte vorragen und wobei die Schenkelabschnitte im Inneren des Halbhohlprofils derart ausgebildet sind, dass diese mit den jeweiligen Wandabschnitten jeweils eine von der Basis weg gerichtete Hinterschneidung bildern, von denen jede von einem der beiden Eingriffselemente hintergriffen ist. Die Schiene ist integral aus dem Grundträgerelement und den Eingriffselementen ausgebildet. Der Begriff "integral" ist hierbei dahingehend zu verstehen, daß im Produktionsprozeß das Grundträgerelement sowie die Eingriffselemente getrennt gefertigt werden und anschließend mechanisch miteinander verbunden werden. Die Schiene ist somit mehrteilig ausgeführt und zu einem einzigen Integralteil zusammengefügt. Die Schiene ist als Halbhohlprofil geformt, d.h. bildet somit eine Profilstange mit nicht vollständig geschlossenem Hohlraum aus. In anderen Worten kann die Schiene beispielsweise in ihrem Querschnitt U-förmig ausgebildet sein. Die Bereiche der Schiene, welche durch die Eingriffselemente gebildet werden, weisen zumindest bereichsweise Eingriffsabschnitte auf. Die Eingriffsabschnitte sind vorteilhafterweise derart ausgebildet, daß diese dem Grundträgerelement zugewandt sein können. Infolgedessen erfolgt ein Eingriff des Befestigungselements mit den Eingriffsabschnitten durch eine Kraft, welche im wesentlichen vom Grundträgerelement weg gerichtet ist. Bei einem Einbau der Schiene am Boden eines Behältnisses erfolgt eine Arretierung bzw. Befestigung des Befestigungselements an der Schiene im wesentlichen durch eine Belastung der Schiene auf Zug (d.h. nach oben). Sofern keine Kraft in Richtung der Eingriffsabschnitte auf das Befestigungselement ausgeübt wird, läßt sich dieses in dem Halbhohlprofil der Schiene entlang dieser bewegen. Es wird somit ein Befestigungssystem bereitgestellt, welches durch den integralen Aufbau der Schiene derart gestaltet werden kann, daß das Grundträgerelement sowie die Eingriffselemente derart dimensioniert werden können, daß diese eine erhebliche Kraft aufnehmen können. Die Schiene kann hierbei mittels eines Strangguß- bzw. -pressverfahrens gefertigt werden, wobei als Material vorteilhafterweise eine Alulegierung verwendet wird, welche eine Festigkeit von mindestens 350 Newton/mm² aufweiset. Das Befestigungselement ist derart ausgebildet, daß es eine Aufnahmevorrichtung aufweist, um Sperrbalken, Sperrstangen, Gurte oder dergleichen aufzunehmen bzw. daran zu befestigen. Insbesondere kann das Befestigungssystem in einem Fahrzeug verwendet werden, wobei dieses an allen in einem Raum befindlichen Ebenen, wie Boden, Seite oder Dach, angeordnet bzw. befestigt bzw. montiert werden kann. So ist es beispielsweise möglich, auf allen vier Ebenen im Fahrzeug zumindest eine Schiene anzubringen, so daß die Möglichkeit geschaffen wird, eine variable Trennwand in einem Fahrzeug vorzusehen. Ebenfalls ist es möglich, die Schiene nicht nur zum Sichern von Ladegut zu verwenden sondern ebenfalls zur Sicherung von Sitzelementen oder ähnlichem. Ein bevorzugter Anwendungsbereich dieses Befestigungssystems liegt im Einbau in Laderäumen von z.B. Kleinsttransportern, Krankenwagen, Behindertenfahrzeug, Möbelkoffer, Container, Luftfahrzeug, etc.

Das Grundträgerelement ist aus einer Basis, die vorteilhafterweise plattenförmig ausgebildet ist, und zwei zur Basis rechtwinklig angeordneten Wandabschnitten ausgebildet, wobei von den freien Endbereichen der Wandabschnitte zueinander gerichtete Schenkelabschnitte hervorragen. In anderen Worten weist das Grundträgerelement im wesentlichen im Querschnitt die Form eines U's auf, wobei an den freien Enden des U's jeweils ein nach innen gerichteter Schenkelabschnitt vorgesehen ist. Die Schenkelabschnitte sind somit in anderen Worten zueinander hin gerichtet. Die Schenkelabschnitte dienen vorteilhafterweise dazu, die Eingriffsetemente aufzunehmen bzw. mit diesen verbunden zu werden. Somit können die Schenkelabschnitte vorteilhafterweise die auf die Eingriffsabschnitte ausgeübte Kraft zumindest teilweise aufnehmen.

Die Schenkelabschnitte im Inneren des Halbhohlprofils sind derart ausgebildet, daß diese mit den jeweiligen Wandabschnitten eine Hinterschneidung bilden. Bei entsprechend ausgebildeten Eingriffselementen ist eine Montage von Eingriffselement und Grundträgerelement somit lediglich durch ein Einschieben des Eingriffselements entlang der Längserstreckung des Grundträgerelements möglich. Somit wird vorteilhafterweise ein stabiles Befestigungssystem geschaffen, da Eingriffselement und Grundträgerelement sicher miteinander verbunden werden können.

Zweckmäßigerweise ist die Hinterschneidung im Querschnitt im wesentlichen dreiecksförmig ausgebildet. Es versteht sich, daß diese ebenfalls eine andere, beispielsweise gerade, bogenförmige oder aus Polygonzügen ausgebildete Konfiguration aufweisen kann.

Weiterhin bevorzugt sind die Wandabschnitte von den freien Enden der Basis beabstandet angeordnet. Somit weist das Grundträgerelement im Querschnitt eine U-förmige Konfiguration auf, wobei die Basis des U's über die Schenkel des U's ein vorbestimmtes Stück hervorragt. Somit ist es möglich, diese hervorragenden Abschnitte des Grundträgerelements mit einem Rahmenelement des Behältnisses bzw. Fahrzeugs zu verbinden.

Weiterhin bevorzugterweise ist das Grundträgerelement einstückig ausgebildet. Das Grundträgerelement kann beispielsweise mittels eines Strangguß- oder Strangpressverfahrens hergestellt und in die gewünschte Länge abgelängt werden. Es versteht sich, daß ebenfalls andere Fertigungsmethoden, wie z.B. ein beliebiges Gußverfahren, genutzt werden können.

In einer weiteren bevorzugten Ausführungsform weist das Eingriffselement eine Eingriffselement-Basis sowie einen im wesentlichen rechtwinklig zur Eingriffselement-Basis angeordneten Eingriffselement-Wandabschnitt auf, wobei von dem freien Endbereich des Eingriffselement-Wandabschnitts ein nach innen gerichteter Eingriffselement-Schenkelabschnitt hervorragt. Die Eingriffselement-Basis ist hierbei vorteilhafterweise plattenförmig (rechteckig) ausgebildet, wobei von einer Grundfläche der plattenförmigen Eingriffselement-Basis der Eingriffselement-Wandabschnitt hervorragt. Im Querschnitt bildet somit das Eingriffselement im wesentlichen eine T-Form aus. An einem distalen Ende eines Eingriffselement-Wandabschnitts ist der Eingriffselement-Schenkelabschnitt vorgesehen. Dieser ragt - in bezug auf seine eingebaute Position im Grundträgerelement gesehen - nach außen, in Richtung des Schenkelabschnitts des Grundträgerelements, hervor. Hierbei ist vorteilhafterweise der Eingriffselement-Schenkelabschnitt passend zu dem Schenkelabschnitt des Grundträgerelements ausgebildet, so daß diese ineinandergreifen können.

Vorteilhafterweise ist der Eingriffselement-Schenkelabschnitt derart ausgebildet, daß dieser mit dem Eingriffselement-Wandabschnitt eine Hinterschneidung bildet. Diese Hinterschneidung kann bevorzugterweise im Querschnitt im wesentlichen dreiecksförmig ausgebildet sein. Es versteht sich, daß die Hinterschneidung ebenfalls eine andere, beispielsweise gerade, bogenförmige oder aus Polygonzügen ausgebildete Konfiguration aufweisen kann. Infolgedessen wird eine sichere und feste Verbindung zwischen Eingriffselement und Grundträgerelement geschaffen.

Zweckmäßigerweise sind der Eingriffsabschnitt des Eingriffselements und der Eingriffselement-Schenkelabschnitt an entgegengesetzten Seiten des Eingriffselement-Wandabschnitts angeordnet. So ragt beispielsweise der Eingriffsabschnitt am Eingriffselement nach innen hervor, wohingegen der Eingriffselement-Schenkelabschnitt nach außen hervorragt.

Vorzugsweise ist an einem freien Endbereich der Eingriffselement-Basis ein im wesentlichen rechtwinklig zur Basis angeordneter Schenkel angeordnet, der im wesentlichen in die gleiche Richtung hervorragt wie der Eingriffselement-Wandabschnitt. Dieser ist somit vorteilhafterweise ausgebildet, einen Teil des Grundträgerelements im eingebauten Zustand abzudecken.

Weiterhin bevorzugt sind die Eingriffselemente mechanisch, vorzugsweise über eine lösbare Verklebung, an dem Grundträgerelement befestigt. Hierdurch ist es vorteilhafterweise möglich, bei einer Abnutzung der Eingriffsabschnitte der Eingriffselemente diese vom Grundträgerelement zu entfernen und neue Eingriffselemente am Grundträgerelement zu befestigen.

Vorteilhafterweise weist das Befestigungselement einen im wesentlichen mittig angeordneten Steg auf, welcher ausgelegt ist, zumindest bereichsweise in eine durchlaufende Wandaussparung der Schiene zu ragen. Dieser Steg gewährleistet somit vorteilhafterweise eine Führungsfunktion während der Bewegung des Befestigungselements in der Schiene. Darüber hinaus weist der Steg vorteilhafterweise Mittel auf, an welchen entsprechende Gurte, Sperrstangen oder sonstige Elemente befestigt werden können.

Vorzugsweise sind die Arretierungsabschnitte beidseitig des Steges vorgesehen. Somit wird eine gleichmäßige Kraftverteilung vom Befestigungselement auf die Schiene gewährleistet.

Zweckmäßigerweise weisen die Eingriffsabschnitte und die Arretierungsabschnitte eine Profilierung auf, die vorzugsweise als Verzahnen oder Rändelung ausgebildet ist. Mittels einer Verzahnung ist es somit möglich, das Befestigungselement vorteilhafterweise im wesentlichen stufenlos entlang der Befestigungsschiene zu arretieren bzw. fixieren. Dies ist insbesondere von der Größe der Verzahnung abhängig, wobei vorzugsweise eine Verzahnung mit einem Abstand im Bereich von ca. 4 bis 8 mm vorgesehen sein kann.

Weitere Vorteile und Merkmale der vorliegenden Erfindung werden nachfolgend anhand begleitender Zeichnungen bevorzugter Ausführungsformen beispielhaft beschrieben. Es zeigen:
- Figs. 1a und 1b: eine perspektivische Ansicht sowie eine Schnittansicht einer ersten Ausführungsform des erfindungsgemäßen Befestigungssystems.
- Fig. 2: Querschnittsansichten einer bevorzugten Ausführungsform des Grundträger-elements sowie des Eingriffselements und eine Seitenansicht des Eingriffselements.
- Fig. 3: eine perspektivische Ansicht, eine Schnittansicht sowie zwei Seitenansichten einer bevorzugten Ausführungsform des erfindungsgemäßen Befestigungselements.
- Figs. 4a und 4b: eine perspektivische Ansicht sowie eine Schnittansicht einer zweiten Ausführungsform des erfindungsgemäßen Befestigungssystems.
- Fig. 5: eine Schnittansicht sowie eine Seitenansicht der zweiten Ausführungsform des erfindungsgemäßen Eingriffselements.
- Figs. 6a und 6b: eine perspektivische Ansicht sowie eine Schnittansicht einer dritten Ausführungsform des erfindungsgemäßen Grundträgerelements.

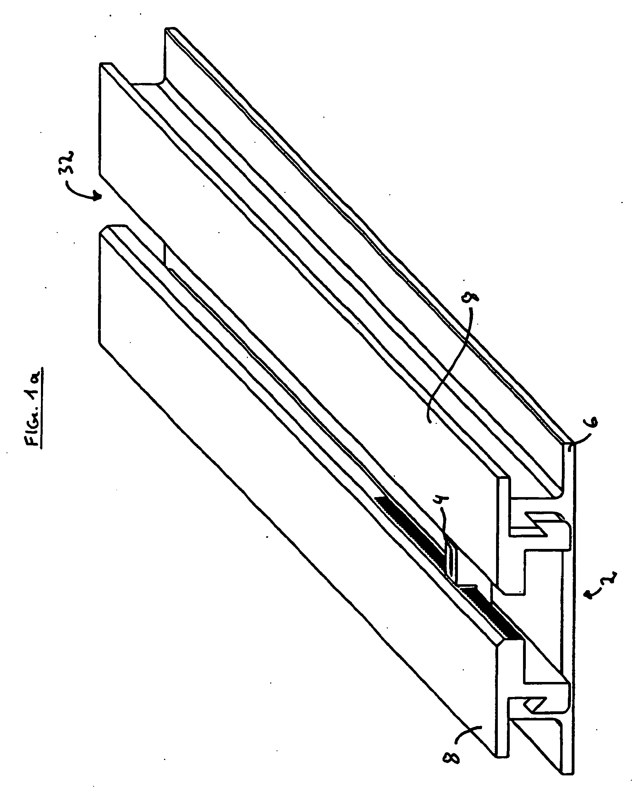

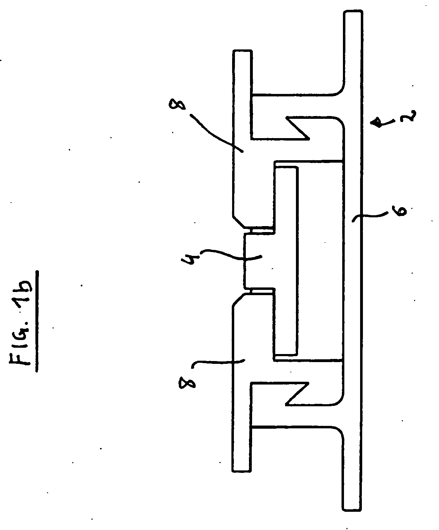

In **Figs. 1a** **und** **1b** ist eine erste Ausführungsform des erfindungsgemäßen Befestigungssystems in perspektivischer Ansicht sowie in einer Schnittansicht dargestellt. Das Befestigungssystem umfaßt eine Schiene 2 sowie ein in der Schiene 2 bewegliches Befestigungselement 4. In der dargestellten Ausführungsform ist die Schiene 2 integral aus drei Elementen zusammengebaut, und zwar einem Grundträgerelement 6 sowie zwei Eingriffselementen 8.

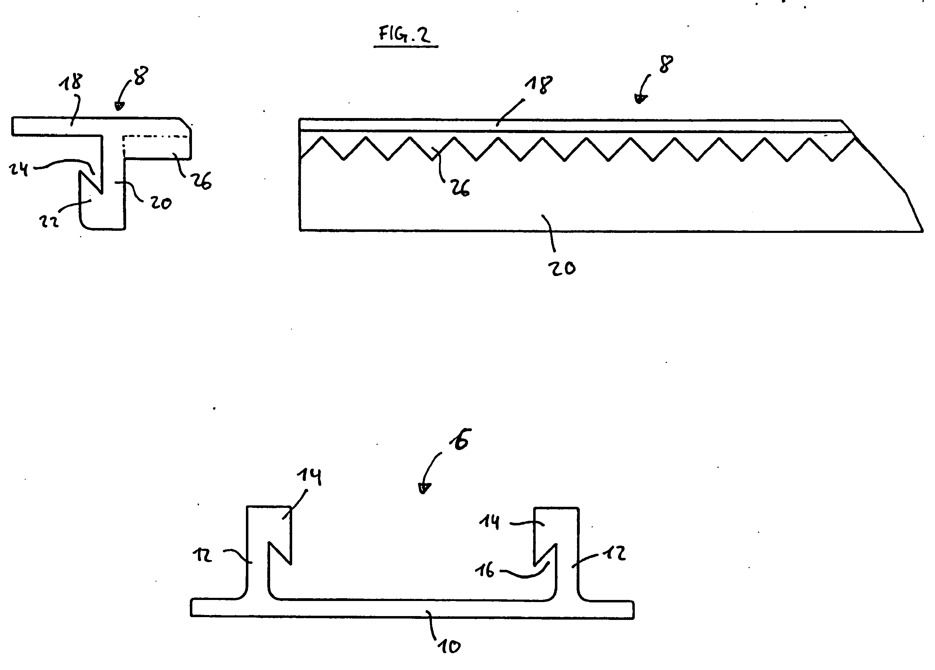

In **Fig. 2** ist der Aufbau der Schiene 2 näher dargestellt. Das Grundträgerelement 6 besteht aus einer Basis 10, welche im wesentlichen plattenförmig mit einem im wesentlichen rechteckigen Grundriß ausgebildet ist. Im wesentlichen rechtwinklig von einer Grundfläche der Basis 10 ragen zwei Wandabschnitte 12 hervor. Diese Wandabschnitte 12 sind vorteilhafterweise nicht gänzlich am distalen Endbereich bzw. den Seitenkanten angeordnet sondern etwas nach innen versetzt. Infolgedessen ist das Grundträgerelement 6 in seinem Querschnitt im wesentlichen U-förmig, wobei an der Basis des U's jeweils ein Vorsprung vorgesehen ist. Diese Vorsprünge dienen vorteilhafterweise der Befestigung der Schiene an einem Rahmenelement des Fahrzeugs. An einem freien Endbereich des Wandabschnitts 12 ist jeweils ein Schenkelabschnitt 14 vorgesehen, wobei dieser so angeordnet ist, daß der jeweilige Schenkelabschnitt 14 nach innen ragt. In anderen Worten sind die Schenkelabschnitte 14 des Grundträgerelements 6 zueinander hin gerichtet. Der-Schenkelabschnitt 14 ist derart ausgebildet, daß diester eine Hinterschneidung 16 aufweist. Die Hinterschneidung 16 ist von der Basis 10 weg gerichtet.

Das Eingriffselement 8 ist aus einer Eingriffselement-Basis 18 sowie einem im wesentlichen senkrecht hierzu stehenden Eingriffselement-Wandabschnitt 20 ausgebildet. An einem distalen Ende des Eingriffselement-Wandabschnitts 20 ist ein Eingriffselement-Schenkelabschnitt 22 vorgesehen, welcher eine Hinterschneidung 24 aufweist. Die Hinterschneidung 24 ist entsprechend der Hinterschneidung 16 der Basis 10 ausgebildet, so daß diese ineinander greifen können. An einem gegenüberliegenden Seitenabschnitt des Eingriffselement-Wandabschnitts 20 ist an der Eingriffselement-Basis 18 ein Eingriffsabschnitt 26 vorgesehen. Dieser Eingriffsabschnitt 26 kann vorteilhafterweise als Verzahnung oder Rändelung ausgebildet sein und mit entsprechenden Arretierungsabschnitten 28 des Befestigungselements zusammenwirken.

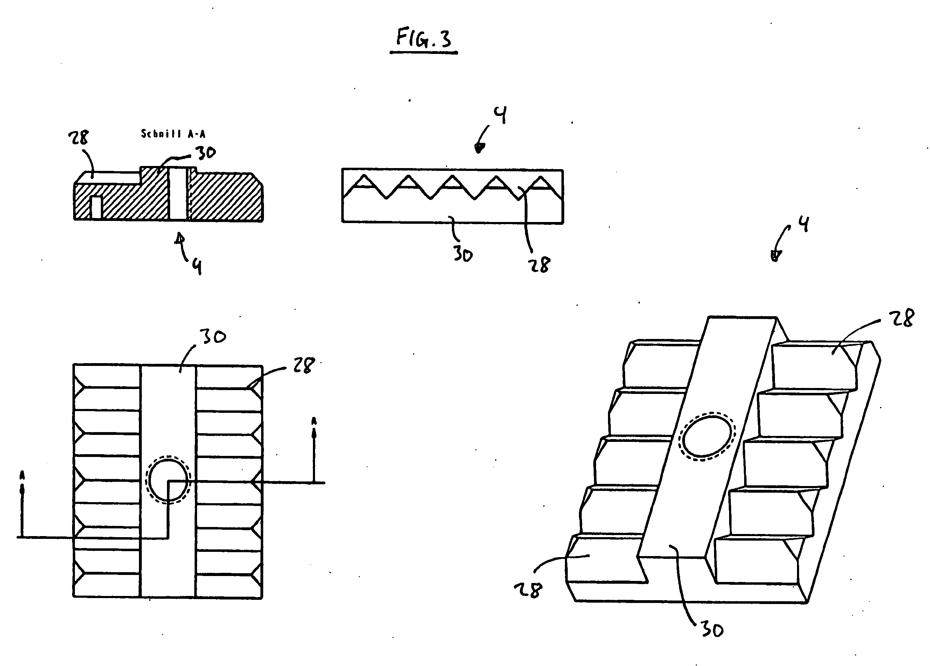

Eine beispielhafte Ausführungsform des Befestigungselements ist in **Fig. 3** dargestellt. Das Befestigungselement 4 ist im wesentlichen quaderförmig aufgebaut, wobei an einer Seite des Quaders die Arretierungsabschnitte 28 vorgesehen sind. Diese sind - entsprechend der Konfiguration der Eingriffsabschnitte 26 - ebenfalls vorteilhafterweise als Verzahnung oder Rändelung ausgebildet. In Längsrichtung des Befestigungselements 4 erstreckt sich über dieses ein Steg 30, welcher ausgebildet ist, zumindest bereichsweise in eine durchlaufende Wandaussparung 32 **(****Fig. 1****)** der Schiene 2 zu ragen. Somit bewirkt der Steg 30 vorteilhafterweise eine Führungsfunktion. Darüber hinaus ist an dem Steg 30 ebenfalls ein Mittel vorgesehen, um ein Spannelement daran zu befestigen, insbesondere einen Gurt über eine Öse, welche an dem Steg befestigt werden kann oder auch eine Sperrstange.

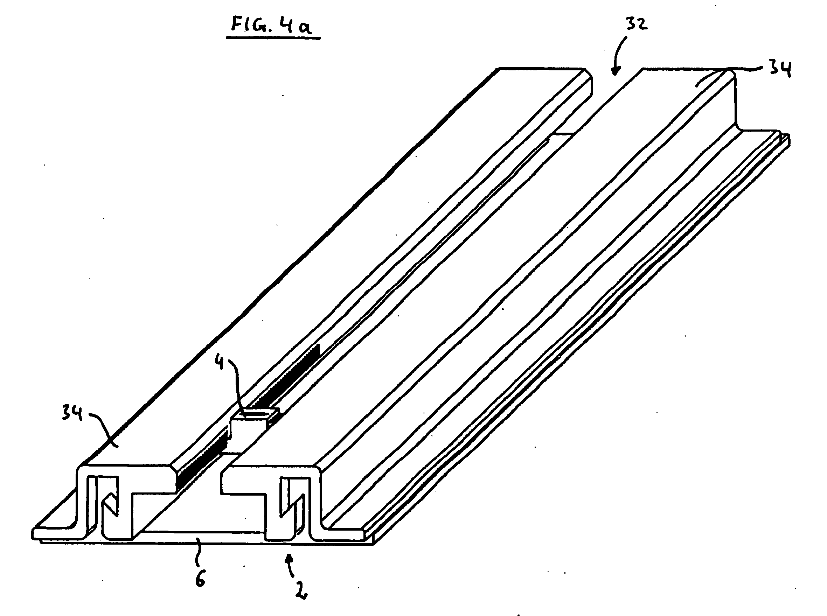

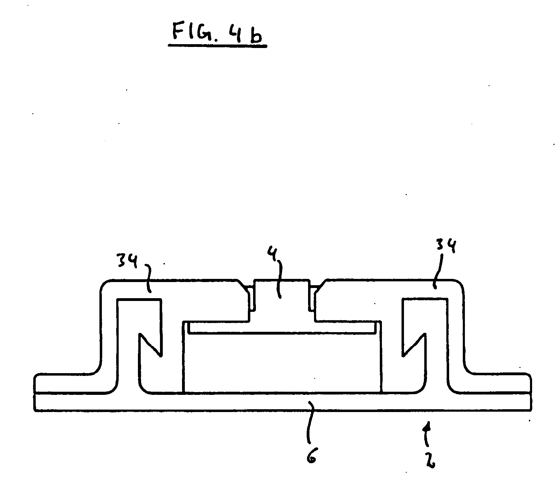

In **Figs. 4a** **und** **4b** ist eine perspektivische Ansicht sowie eine Schnittansicht einer weiteren bevorzugten Ausführungsform des erfindungsgemäßen Befestigungssystems dargestellt. Hierbei werden die mit der ersten Ausführungsform identischen Elemente mit gleichen Bezugsziffern versehen.

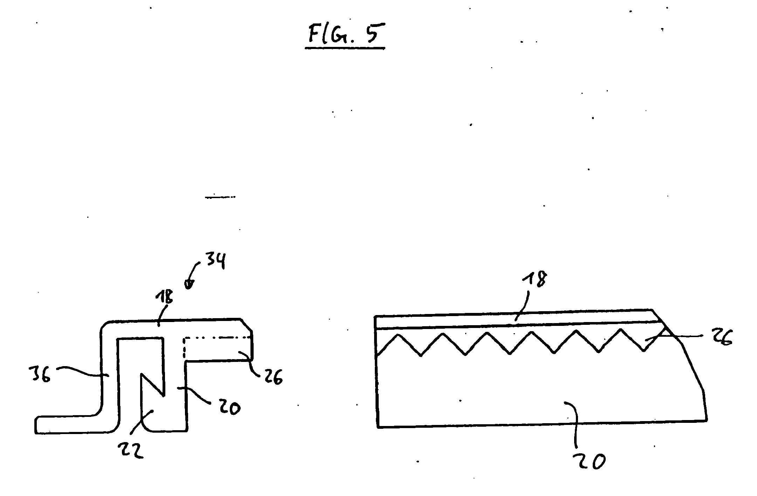

Im Gegensatz zur ersten Ausführungsform weist diese Ausführungsform des erfindungsgemäßen Befestigungssystems modifizierte Eingriffselemente 34 auf. Diese sind im Detail in **Fig. 5** dargestellt. Wie in der ersten Ausführungsform weist das Eingriffselement 34 eine Eingriffselement-Basis 18, einen Eingriffselement-Wandabschnitt 20 sowie einen Eingriffselement-Schenkelabschnitt 22 auf. Zusätzlich hierzu ist an einem freien Ende der Eingriffselement-Basis 18 ein Eingriffselement-Schenkel 36 vorgesehen, welcher im wesentlichen rechtwinklig von der Eingriffselement-Basis 18 hervorragt. Infolgedessen ragt der Eingriffselement-Schenkel 36 im wesentlichen in die gleiche Richtung bzw. parallele Richtung wie der Eingriffselement-Wandabschnitt hervor. Der Eingriffselement-Schenkel 36 kann insbesondere vorteilhafterweise in Form eines L-Profils ausgebildet sein, so daß der Eingriffselement-Schenkel 36 in seinem Endbereich in einem Abschnitt endet, welcher im wesentlichen parallel zu der Eingriffselement-Basis 18 ist. Wie in **Fig. 4** ersichtlich, deckt somit der Eingriffselement-Schenkel 36 im wesentlichen die Vorsprünge des Grundträgerelements 6 seitlich ab. Hierdurch wird die Stabilität des Befestigungssystems nochmals erhöht.

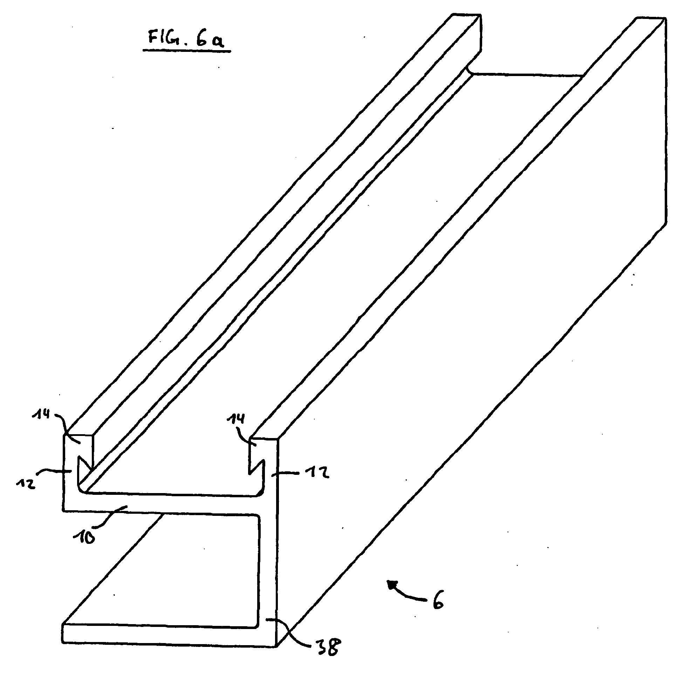

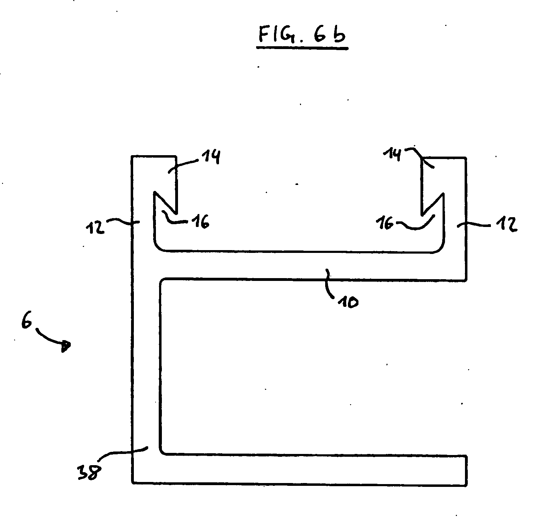

In den **Figs. 6a** und **6b** ist eine perspektivische Ansicht sowie eine Schnittansicht einer dritten Ausführungsform des erfindungsgemäßen Grundträgerelements 6 dargestellt. Das Grundträgerelement 6 weist ebenfalls eine Basis 10 sowie im wesentlichen rechtwinklig hierzu hervorragende Wandabschnitte 12 auf, an welchen jeweils Schenkelabschnitte 14 angeordnet sind. Die Schenkelabschnitte 14 bilden mit dem jeweiligen Wandabschnitt 12 eine Hinterschneidung 16 aus. Das Grundträgerelement 6 bildet in seinem Querschnitt im wesentlichen eine U-Form aus, wobei an der Basis des U's - wie in Fig. 2 dargestellt - ein Vorsprung vorgesehen sein kann. Dieser ist jedoch nicht notwendigerweise vorgesehen. Alternativ oder zusätzlich weist das Grundträgerelement 6 in der in den Figs. 6a und 6b dargestellten Ausführungsform zumindest einen Schenkel 38 auf. Der Schenkel 38 ist an einem freien Ende der Basis 10 des Grundträgerelements 6 vorgesehen.

Der Schenkel 38 kann vorteilhafterweise im wesentlichen rechtwinklig von der Basis 10 hervorragen, so dass der Schenkel 38 im wesentlichen die gleiche Richtung wie der bzw. parallele Richtung zu dem Wandabschnitt 12 aufweist. In einer besonders vorteilhaften Ausführungsform ist der Schenkel 38 in Form eines L-Profils ausgebildet, so dass der Schenkel 38 in seinem Endbereich in einem Abschnitt endet, welcher im wesentlichen parallel zu der Basis 10 ausgerichtet ist. Infolgedessen bilden Schenkel 38 sowie Basis 10 im Querschnitt die Form eines U's aus. Hierdurch wird eine vorteilhafterweise stabilere Befestigung des Grundträgerelements 6 an einem Rahmenelement des Fahrzeugs erzielt.

### Bezugszeichenliste

- 2: Schiene
- 4: Befestigungselement
- 6: Grundträgerelement
- 8: Eingriffselement
- 10: Basis
- 12: Wandabschnitt
- 14: Schenkelabschnitt
- 16: Hinterschneidung
- 18: Eingriffselement-Basis
- 20: Eingriffselement-Wandabschnitt
- 22: Eingriffselement-Schenkelabschnitt
- 24: Hinterschneidung
- 26: Eingriffsabschnitt
- 28: Arretierungsabschnitt
- 30: Steg
- 32: durchlaufende Wandaussparung
- 34: Eingriffselement
- 36: Eingriffselement -Schenkel
- 38: Schenkel

## Patentansprüche

1. Befestigungssystem zur Befestigung von Spannelementen, insbesondere von Gurten, Sperrstangen oder dergleichen, umfassend
zumindest eine Schiene (2) und zumindest ein Befestigungselement (4),
**dadurch gekennzeichnet, dass**
die Schiene (2) integral aus zumindest einem Grundträgerelement (6) sowie zumindest zwei Eingriffselementen (8) zusammengefügt ist und ein Halbhohlprofil ausbildet, wobei die Eingriffselemente (8) zumindest bereichsweise Eingriffsabschnitte (26) aufweisen, und
wobei das Befestigungselement (4) ausgelegt ist, im Halbhohlprofil der Schiene (2) zu gleiten und über Arretierungsabschnitte (28) mit den Eingriffsabschnitten (26) in Eingriff zu gelangen,
wobei das Grundträgereiement (6) aus einer Basis (10) und zwei zur Basis rechtwinklig angeordneten Wandabschnitten (12) ausgebildet ist,
wobei von den freien Endbereichen der Wandabschnitte (12) zueinander gerichtete Schenkelabschnitte (14) vorragen, und
wobei die Schenkelabschnitte (14) im Inneren des Halbhohlprofils derart ausgebildet sind, dass diese mit den jeweiligen Wandabschnitten (12) jeweils eine von der Basis (10) weg gerichtete Hinterschneidung (16) bilden, von denen jede von einem der beiden Eingriffselemente (8) hintergriffen ist.

2. Befestigungssystem nach Anspruch 1, wobei die Basis (10) plattenförmig ausgebildet ist.

3. Befestigungssystem nach Anspruch, 1 oder 2, wobei die Hinterschneidung (16) im Querschnitt im wesentlichen dreiecksförmig ausgebildet ist.

4. Befestigungssystem nach einem der Ansprüche 1 - 3, wobei die Wandabschnitte (12) von den freien Enden der Basis (10) beabstandet angeordnet sind.

5. Befestigungssystem nach einem der vorhergehenden Ansprüche, wobei das Grundträgerelement (6) einstückig ausgebildet ist.

6. Befestigungssystem nach einem der vorhergehenden Ansprüche, wobei das Eingriffselement (8) eine Eingriffselement-Basis (18) sowie einen im wesentlichen rechtwinklig zur Eingriffselement-Basis (18) angeordneten Eingriffselement-Wandabschnitt (20) aufweist, und wobei von dem freien Endbereich des Eingriffselement-Wandabschnitts (20) ein Eingriffselement-Schenkelabschnitt (22) vorragt.

7. Befestigungssystem nach Anspruch 6, wobei der Eingriffselement-Schenkelabschnitt (22) derart ausgebildet ist, daß dieser mit dem Eingriffselement-Wandabschnitt. (20) eine Hinterschneidung (24) bildet.

8. Befestigungssystem nach Anspruch 7, wobei die Hinterschneidung (24) im Querschnitt im wesentlichen dreiecksförmig ausgebildet ist.

9. Befestigungssystem nach einem der Ansprüche 6 - 8, wobei der Eingriffsabschnitt (26) des Eingriffselements (8) und der Eingriffselement-Schenkelabschnitt (22) an entgegengesetzten Seiten des Eingriffselement-Wandabschnitts (20) angeordnet sind.

10. Befestigungssystem nach einem der Ansprüche 6 - 9, wobei an einem freien Endbereich der Eingriffselement-Basis (18) ein im wesentlichen rechtwinklig zur Eingriffselement-Basis (18) angeordneter Schenkel (36) angeordnet ist, der im wesentlichen in die gleiche Richtung hervorragt wie der Eingriffselement-Wandabschnitt (20).

11. Befestigungssystem nach einem der vorhergehenden Ansprüche, wobei die Eingriffselemente (8) mechanisch, vorzugsweise über eine lösbare Verklebung, an dem Grundträgerelement (6) befestigt sind.

12. Befestigungssystem nach einem der vorhergehenden Ansprüche, wobei das Befestigungselement (4) einen im wesentlichen mittig angeordneten Steg (30) aufweiset, welcher ausgelegt ist, zumindest bereichsweise in eine durchlaufende Wandaussparung (32) der Schiene (2) zu ragen.

13. Befestigungssystem nach Anspruch 12, wobei die Arretierungsabschnitte (28) beidseitig des Steges (30) vorgesehen sind.

14. Befestigungssystem nach einem der vorhergehenden Ansprüche, wobei die Eingriffsabschnitte (26) und die Arretierungsabschnitte (28) eine Profilierung aufweisen, die vorzugsweise als Verzahnung oder Rändelung ausgebildet ist.

## Claims

1. A fastening system for fastening tightening elements, in particular straps, locking bars or the like, comprising:
at least one rail (2) and at least one fastening element (4),
**characterized in that**
the rail (2) is integrally made up of at least a base support element (6) and at least two engaging elements (8) and forms a semi-hollow profile, wherein the engaging elements (8) have engaging portions (26) in some areas, and
wherein the fastening element (4) is designed to slide in the semi-hollow profile of the rail (2) and to be engaged with the engaging portions (26) via latching portions (28),
wherein the base support element (6) is formed of a base (10) and two wall portions (12) arranged at right angles with respect to the base,
wherein leg portions (14) facing each other project from the free end regions of the wall portions (12), and
wherein the leg portions (14) are formed inside the semi-hollow profile such that they each form an undercut (16), facing away from the base (10), together with the respective wall portions (12), each undercut being engaged by one of the two engaging elements (8).

2. The fastening system according to claim 1, wherein the base (10) is formed in a plate-like fashion.

3. The fastening system according to claim 1 or 2, wherein the cross-section of the undercut (16) is formed substantially in a triangular fashion.

4. The fastening system according to one of claims 1-3, wherein the wall portions (12) are spaced from the free ends of the base (10).

5. The fastening system according to one of the preceding claims, wherein the base support element (6) is formed in one piece.

6. The fastening system according to one of the preceding claims, wherein the engaging element (8) has an engaging element base (18) and an engaging element wall portion (20) arranged at a right angle with respect to the engaging element base (18), and wherein an engaging element leg portion (22) projects from the free end region of the engaging element wall portion (20).

7. The fastening system according to claim 6, wherein the engaging element leg portion (22) is designed such that it forms an undercut (24) together with the engaging element wall portion (20).

8. The fastening system according to claim 7, wherein the cross-section of the undercut (24) is formed substantially in a triangular fashion.

9. The fastening system according to one of claims 6-8, wherein the engaging portion (26) of the engaging element (8) and the engaging element leg portion (22) are arranged on opposite sides of the engaging element wall portion (20).

10. The fastening system according to one of claims 6-9, wherein a leg (36) substantially arranged at a right angle with respect to the engaging element base (18) is arranged on a free end region of the engaging element base (18), the leg projecting in substantially the same direction as the engaging element wall portion (20).

11. The fastening system according to one of the preceding claims, wherein the engaging elements (8) are mechanically fixed to the base support element (6), preferably via a releasable adhesive bond.

12. The fastening system according to one of the preceding claims, wherein the fastening element (4) has a substantially centrally arranged web (30) designed to protrude into a continuous wall recess (32) of the rail (2) at least in some areas.

13. The fastening system according to claim 12, wherein the latching portions (28) are provided on both sides of the web (30).

14. The fastening system according to one of the preceding claims, wherein the engaging portions (26) and the latching portions (28) have a profiling preferably formed as a toothing or knurl.

## Revendications

1. Système de fixation pour la fixation d'éléments de serrage, en particulier des courroies, des barres de blocage ou similaires, comportant :
au moins un rail (2) et au moins un élément de fixation (4),
**caractérisé en ce que**
le rail (2) est assemblé intégralement à partir d'au moins un élément porteur de base (6) ainsi que d'au moins deux éléments à engagement (8) et réalise un profilé demi creux, dans lequel les éléments à engagement (8) présentent des tronçons à engagement (26) au moins par zones, et
dans lequel l'élément de fixation (4) est conçu pour glisser dans le profilé demi creux du rail (2) et pour arriver en engagement avec les tronçons à engagement (26) par l'intermédiaire des tronçons de blocage (28),
dans lequel l'élément porteur de base (6) est réalisé à partir d'une base (10) et de deux tronçons de paroi (12) agencés perpendiculairement à la base,
dans lequel des tronçons de branche (14) dirigés l'un vers l'autre dépassent des zones terminales libres des tronçons de paroi (12), et
dans lequel les tronçons de branche (14) à l'intérieur du profilé demi creux sont réalisés de telle sorte que ceux-ci forment respectivement, avec les tronçons de paroi respectifs (12), une contre-dépouille (16) dirigée à l'écart de la base (10) parmi lesquelles chacune vient en prise par derrière avec un des deux éléments à engagement (8).

2. Système de fixation selon la revendication 1, dans lequel la base (10) est réalisée en forme de plaque.

3. Système de fixation selon l'une ou l'autre des revendications 1 et 2, dans lequel la contre-dépouille (16) est réalisée sensiblement en forme de triangle.

4. Système de fixation selon l'une des revendications 1 à 3, dans lequel les tronçons de paroi (12) sont agencés à distance des extrémités libres de la base (10).

5. Système de fixation selon l'une des revendications précédentes, dans lequel l'élément porteur de base (6) est réalisé en un seul tenant.

6. Système de fixation selon l'une des revendications précédentes, dans lequel l'élément à engagement (8) présente une base d'élément à engagement (18) ainsi qu'un tronçon de paroi d'élément à engagement (20) agencé sensiblement en angle droit par rapport à la base d'élément à engagement (18), et dans lequel un tronçon de branche d'élément à engagement (22) dépasse de la zone terminale libre du tronçon de paroi d'élément à engagement (20).

7. Système de fixation selon la revendication 6, dans lequel le tronçon de branche d'élément à engagement (22) est réalisé de telle sorte que celui-ci forme une contre-dépouille (24) avec le tronçon de paroi d'élément à engagement (20).

8. Système de fixation selon la revendication 7, dans lequel la contre-dépouille (24) est réalisée sensiblement en forme de triangle dans la section transversale.

9. Système de fixation selon l'une des revendications 6 à 8, dans lequel le tronçon à engagement (26) de l'élément à engagement (8) et le tronçon de branche d'élément à engagement (22) sont agencés sur des côtés opposés du tronçon de paroi d'élément à engagement (20).

10. Système de fixation selon l'une des revendications 6 à 9, dans lequel une branche (36), laquelle est agencée sensiblement en angle droit par rapport à la base d'élément à engagement (18) et laquelle dépasse sensiblement dans la même direction que le tronçon de paroi d'élément à engagement (20), est agencée sur une zone terminale libre de la base d'élément à engagement (18).

11. Système de fixation selon l'une des revendications précédentes, dans lequel les éléments à engagement (8) sont fixés mécaniquement sur l'élément porteur de base (6), de préférence par l'intermédiaire d'un collage qui peut être supprimé.

12. Système de fixation selon l'une des revendications précédentes, dans lequel l'élément de fixation (4) présente une barre (30) agencée sensiblement au milieu, laquelle est conçue pour faire saillie au moins par zone dans un évidement continu de paroi (32) du rail (2).

13. Système de fixation selon la revendication 12, dans lequel les tronçons de blocage (28) sont prévus des deux côtés de la barre (30).

14. Système de fixation selon l'une des revendications précédentes, dans lequel les tronçons à engagement (26) et les tronçons de blocage (28) présentent un profilage qui est réalisé de préférence comme denture ou comme moletage.
